# EUROPÄISCHE PATENTSCHRIFT

(11) **EP 2 149 826 B1**
(45) Veröffentlichungstag und Bekanntmachung des Hinweises auf die Patenterteilung: **30.11.2011**
(21) Anmeldenummer: 08013874.6
(22) Anmeldetag: 01.08.2008
(51) Int. Cl.: G05B 19/042

(54) **Sicherheitsschaltanordnung zur Ausgabe eines Schaltsignals**
Safety switching arrangement for outputting a switching signal
Circuit de sécurité avec contacteurs pour générer un signal de commutation

(43) Veröffentlichungstag der Anmeldung: 03.02.2010
(73) Patentinhaber: Siemens Aktiengesellschaft, 80333 München (DE)
(72) Erfinder: Haller, Herbert, 92260 Fichtenhof (DE)

(56) Entgegenhaltungen:
- DE-A1- 19 508 841
- DE-A1-102005 030 276

## Beschreibung

Die Erfindung betrifft eine Sicherheitsschaltanordnung zur Ausgabe eines Schaltsignals für zumindest einen Schalter zur sicherheitsgerichteten Unterbrechung eines Stromkreises, über den die Abschaltung der Stromversorgung eines Verbrauchers steuerbar ist.

Eine Sicherheitsschaltanordnung wird in Schaltanlagen eingesetzt, um eine erhöhte Sicherheit zu ermöglichen. Die Sicherheitsschaltanordnung überwacht eine externe elektrische Einrichtung und schaltet in Abhängigkeit des Überwachungsergebnisses die Energieversorgung zu einem Verbraucher oder einer Last. Die überwachte elektrische Einrichtung und der Verbraucher können dasselbe Gerät sein. Die Sicherheitsschaltvorrichtung schaltet in der Regel den Verbraucher nicht unmittelbar, sondern mittelbar über spezielle Schaltgeräte. Insbesondere steuert die Sicherheitsschaltanordnung ein verbraucherspezifisches Schaltgerät, beispielsweise einen Motorschütz oder einen Hilfsschütz für einen solchen Motorschütz.

Die sicherheitstechnischen Anforderungen an eine Sicherheitsschaltanordnung werden in der Norm IEC 13849 geregelt. In dieser Norm sind unterschiedliche Kategorien vorgesehen, wobei die Kategorie 4 der höchsten Sicherheitsstufe entspricht. Um die Kategorie 4 zu erreichen, ist es notwendig, dass alle sicherheitstechnisch relevanten Bauteile der Sicherheitsschaltanordnung redundant ausgeführt sind.

In einer sicherheitsgerichteten Sicherheitsschaltanordnung muss oder müssen der oder die Schalter mit einem sicheren Ansteuersignal beaufschlagt werden. Für die Entwickler einer derartigen Sicherheitsschaltanordnung bedeutet dies, dass sie detailliertes Wissen über die Funktion sicherheitsgerichteter Ausgänge der Sicherheitsschaltanordnung verfügen müssen. Je nach Einsatzzweck der Sicherheitsschaltanordnung kann eine unterschiedliche Ausgestaltung derjenigen Bestandteile der Sicherheitsschaltanordnung notwendig sein, welche das sichere Ansteuersignal am Ausgang bereitstellen. Insbesondere ist zur Ansteuerung und Auswertung sog. "Dunkeltests" die Anpassung der in Auswerteschaltungen implementierten Firmware notwendig. Dieser Vorgang benötigt zum einen wertvolle Prozesszeit und zum anderen Ressourcen der Auswerteschaltungen.

Die DE 102005030276 A1 beschreibt eine Sicherheitsschaltvorrichtung, insbesondere zum sicheren Abschalten eines Verbrauchers in einer automatisiert arbeitenden Anlage mit zumindest einem Eingang zum Aufnehmen eines analogen Eingangssignals. Ferner ist ein A/D-Wandler vorgesehen, der das analoge Eingangssignal in ein digitales Signal wandelt. Eine Auswerte- und Steuereinheit steuert in Abhängigkeit vom digitalen Signal zumindest ein Ausgangs-Schaltelement an. Ein analoger Signal-Kombinierer ist dazu ausgebildet, dem analogen Eingangssignal ein analoges Testsignal zu überlagern, um ein analoges Kombinations-Signal zu bilden. Das analoge Kombinationssignal ist dem A/D-Wandler zugeführt. Mit Hilfe des analogen Testsignals lässt sich dann die Funktion der Sicherheitsschaltvorrichtung auf Fehler überwachen.

Aus der DE 19508841 A1 geht eine Sicherheitsschaltanordnung zum Ein- und Ausschalten der Stromversorgung eines Arbeitsmittels mittels eines Sensor-Signals hervor, welches dem Arbeitsmittel über zwei Auswerte-Kanäle mit jeweils einem Aktor zugeführt wird. Die Aktoren weisen aus Halbleiter-Elementen bestehende schalterartige Mittel auf. Jedem Aktor ist eine Rechnereinheit vorgeschaltet, die mit dem Aktor über zwei bidirektionale Zuleitungen verbunden ist, wobei über die erste Zuleitung rücklesbar Schaltimpulse von der Rechnereinheit zum Aktor übertragen werden, und wobei über die zweite Zuleitung rücklesbar Testimpulse von der Rechnereinheit zum Aktor zu dessen Funktionsüberprüfung übertragen werden. Die Rechnereinheiten sind über eine bidirektionale Zuleitung zu deren Funktionsüberprüfung verbunden. Von den Rechnereinheiten werden zur Funktionsüberprüfung der Aktoren die Schaltzustände der schalterartigen Mittel so kurzzeitig geändert, dass sich der Betriebszustand des Arbeitsmittels aufgrund seiner Trägheit nicht ändert. Mittels einer Spannungsüberwachungseinheit wird die Betriebsspannung der Rechnereinheiten überwacht.

Es ist daher Aufgabe der vorliegenden Erfindung, eine Sicherheitsschaltanordnung anzugeben, welche auf einfachere Weise die Ausgabe eines sicheren Schaltsignals für zumindest einen Schalter ermöglicht.

Diese Aufgabe wird durch eine Sicherheitsschaltanordnung mit den Merkmalen des Patentanspruches 1 gelöst. Vorteilhafte Ausgestaltungen ergeben sich aus den abhängigen Patentansprüchen.

Die Erfindung schafft eine Sicherheitsschaltanordnung zur Ausgabe eines Schaltsignals für zumindest einen Schalter zur sicherheitsgerichteten Unterbrechung eines Stromkreises, über den die Abschaltung der Stromversorgung eines Verbrauchers steuerbar ist. Die Sicherheitsschaltanordnung umfasst zumindest eine Auswerteschaltung, welche an einem jeweiligen Ausgang ein jeweiliges unsicheres Ansteuersignal für den zumindest einen Schalter abgibt. Die Sicherheitsschaltanordnung umfasst weiter eine programmierbare Logik, welcher das oder die Ansteuersignale an einem jeweiligen Eingang zuführbar sind, und welche zur Ansteuerung des zumindest einen Schalters mit einem sicheren Ansteuersignal mit dem zumindest einen Schalter verbunden ist, wobei die programmierbare Logik als Test- und Überwachungseinrichtung ausgeführt ist, die während des Betriebs die einwandfreie Funktion des jeweiligen Schalters testen und überwachen kann. Schließlich umfasst die Sicherheitsschaltanordnung eine sichere potentialgebundene erste Klemme des zumindest einen Schalters, die zur Überwachung ihres Potentialzustands mit einem jeweiligen Feedback-Eingang der programmierbaren Logik verbunden ist, wobei der betreffende Potentialzustand im fehlerlosen Betrieb dem sicheren Ansteuersignal des zumindest einen Schalters entspricht.

Die erfindungsgemäße Sicherheitsschaltanordnung ermöglicht ein standardisiertes Ansteuern und Auswerten sicherheitsgerichteter Ausgänge. Für die Entwickler von sicherheitsgerichteten Auswerteschaltungen ist weniger oder gar kein Wissen über die Arbeitsweise sicherheitsgerichteter Ausgänge notwendig. Ermöglicht wird dies durch die Trennung der Funktionalität der Auswerteschaltungen und der für die sicherheitsgerichtete Funktionalität notwendigen Komponenten, welche in der programmierbaren Logik vereint sind. Die in der zumindest einen Auswerteschaltung vorgenommenen Berechnungen oder Überprüfungen können unabhängig von sicherheitsgerichteten Notwendigkeiten am Ausgang der Sicherheitsschaltanordnung vorgenommen werden. Ein unsicheres Ansteuersignal für den zumindest einen Schalter wird der programmierbaren Logik übergeben, welche sämtliche Tests und Überwachungen durchführt, so dass von der programmierbaren Logik ein sicheres Ansteuersignal an den zumindest einen Schalter abgegeben werden kann. Ein wesentlicher Vorteil dieser Vorgehensweise besteht darin, dass die zumindest eine Auswerteschaltung durch kleinere und kostengünstigere Mikroprozessoren gebildet werden kann.

Die erfindungsgemäße Sicherheitsschaltanordnung lässt sich in Kategorie 4-Anwendungen einsetzen, so dass aufgrund der Notwendigkeit, dass alle sicherheitstechnisch relevanten Bauteile redundant ausgeführt sind, die Sicherheitsschaltanordnung zwei seriell miteinander verschaltete Schalter sowie zwei Auswerteschaltungen umfasst, welche an einem jeweiligen Ausgang ein unsicheres Ansteuersignal für einen jeweiligen Schalter abgeben, umfasst. Die erfindungsgemäße Schaltanordnung lässt sich jedoch auch in solchen Systemen einsetzen, bei denen lediglich ein Schalter und/oder eine Auswertevorrichtung notwendig ist.

Gemäß einer Ausgestaltung der erfindungsgemäßen Schaltanordnung umfasst die programmierbare Logik ein Mittel zur Generierung von Testpulsen, welche den an den jeweiligen Eingängen der programmierbaren Logik anliegenden Ansteuersignalen der zumindest einen Auswerteschaltung überlagerbar sind und welche bei bestimmungsgemäßer Funktion des zumindest einen Schalters an den jeweiligen Feedback-Eingängen detektierbar sind. Die Überprüfung der bestimmungsgemäßen Funktionalität des zumindest einen Schalters kann damit parallel zum Betrieb der zumindest einen Auswerteschaltung erfolgen. Eine Unterbrechung des Ablaufs der zumindest einen Auswerteschaltung zu Test- und Überwachungszwecken des zumindest einen Schalters ist damit nicht mehr notwendig.

Es ist weiterhin vorgesehen, dass ein Status einer jeweiligen Klemme in jeweils redundante Register der programmierbaren Logik oder der zumindest einen Auswerteschaltung einschreibbar ist. Zum Einschreiben des Status in die zwei Register wird vorzugsweise ein sicheres Kommunikationsprotokoll verwendet. Das Einschreiben des Status einer jeweiligen Klemme in zwei Register stellt eine Redundanz bereit, welche für eine Anwendung der Kategorie 4 notwendig ist.

Es ist ferner vorgesehen, dass jedem der Schalter ein Mittel zur Erkennung von Überstrom zugeordnet ist, welches zur Überwachung des in der jeweiligen Schaltstrecke fließenden Stroms ausgebildet ist. Dies ermöglicht die Verwendung einfacher Schalter, insbesondere ohne darin integrierte Temperaturüberwachung. Die Verwendung einfacher Schalter, wie z.B. MOSFETs im Vergleich zu sog. Smart MOSFETs, ist kostengünstiger. Das Mittel zur Erkennung von Überstrom kann aus einfachen diskreten Bauelementen, wie z.B. Shunts, und Widerständen ausgebildet sein. Die Auswertung der Höhe des Stroms sowie ein gegebenenfalls daraus resultierendes Ansteuersignal zum Ausschalten des Schalters können in der programmierbaren Logik oder auch in dem Mikrocontroller erfolgen.

Insbesondere weist die programmierbare Logik eine, insbesondere serielle, Kommunikationsverbindung zu der zumindest einen Auswerteschaltung auf. Die Kommunikationsverbindung kann zum Austausch von Statusdaten, Fehlern an einer jeweiligen Klemme oder zur Parametrierung der programmierbaren Logik verwendet werden. Die Kommunikationsverbindung kann als serielle Kommunikation, z.B. SPI (Serial Peripheral Interface) oder IO-Link, ausgebildet sein. Es ist insbesondere zweckmäßig, wenn ein Datenaustausch über die Kommunikationsverbindung unter Verwendung eines sicheren Protokolls erfolgt. Die Kommunikationsverbindung kann auch dazu verwendet werden, der programmierbaren Logik ein Ansteuersignal für den zumindest einen Schalter zur Verfügung zu stellen, wobei das über die Kommunikationsverbindung bereitgestellte Ansteuersignal ein unsicheres Ansteuersignal ist. Dieses wird durch die Verarbeitung in der programmierbaren Logik in der oben beschriebenen Weise zu einem sicheren Ansteuersignal.

Die programmierbare Logik kann beispielsweise als FPGA (Field Programmable Gate Array) oder als ASIC (Application Specific Integrated Circuit) ausgebildet sein.

Die Erfindung wird nachfolgend anhand eines Ausführungsbeispiels näher erläutert. Es zeigen:
- Fig. 1: eine erfindungsgemäße Sicherheitsschaltanordnung, und
- Fig. 2: ein Ausführungsbeispiel einer programmierbaren Lo- gik der erfindungsgemäßen Sicherheitsschaltanord- nung.

Die erfindungsgemäße Sicherheitsschaltanordnung gemäß der Kategorie 4 der IEC 13849 umfasst zwei an sich identische Auswerteschaltungen µCA und µCB. Die Auswerteschaltungen µCA, µCB umfassen üblicherweise einen Mikroprozessor und dienen zur redundanten Ansteuerung zweier Schalter TRA, TRB der Sicherheitsschaltanordnung. Jede der Auswerteschaltung µCA, µCB weist zwei Ausgänge OUTA1, OUTB1 bzw. OUTA2, OUTB2 auf, an denen jeweils ein redundantes unsicheres Ansteuersignal für die Schalter TRA bzw. TRB anliegt. Die Ausgänge OUTA1 der Auswerteschaltung µCA und OUTA2 der Auswerteschaltung µCB sind dem Schalter TRA zugeordnet. Die Ausgänge OUTB1 der Auswerteschaltung µCA und OUTB2 der Auswerteschaltung µCB sind dem Schalter TRB zugeordnet. Die genannten Ausgänge OUTA1, OUTB1, OUTA2, OUTB2 sind mit entsprechenden Eingängen INA1, INB1, INA2, INB2 einer programmierbaren Logik PL verbunden.

Die programmierbare Logik PL, die in Gestalt eines FPGA oder ASIC ausgebildet sein kann, ist als Test- und Überwachungseinrichtung ausgeführt, die während des Betriebs der Sicherheitsschaltanordnung die einwandfreie Funktion der Schalter TRA und TRB testen und überwachen kann. Zu diesem Zweck ist ein sicherer Ausgang OUTA mit einem Steueranschluss des Schalters TRA und ein sicherer Ausgang OUTB mit einem Steueranschluss des Schalters TRB verbunden. Das an den Ausgängen OUTA bzw. OUTB anliegende sichere Ansteuersignal ist aus den unsicheren Ansteuersignalen INA1 und INA2 bzw. INB1 und INB2 gebildet.

Die Auswerteschaltungen µCA und µCB sowie die programmierbare Logik PL sind mit einem Versorgungsspannungsanschluss VDD und einem Bezugspotentialanschluss VSS verbunden.

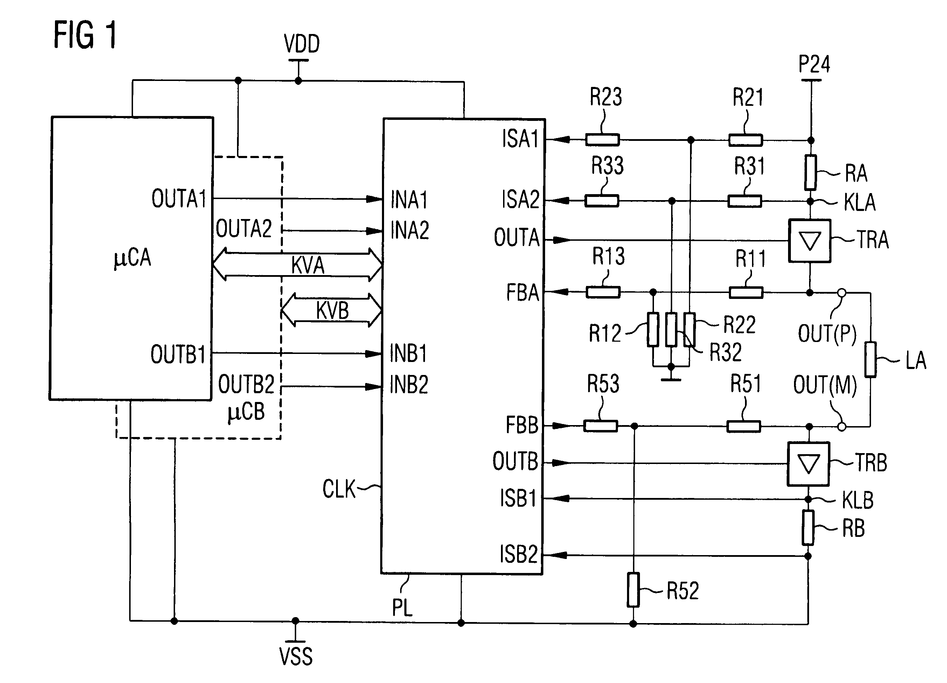

Bei den Schaltern TRA und TRB handelt es sich bevorzugt um Halbleiterschaltelemente, wie z.B. einen MOSFET oder einen IGBT. Die Schalter TRA, TRB können als intelligente Halbleiterschalter ausgebildet sein, welche mit eigenen Mitteln zu deren Funktionsüberwachung ausgestattet sind. So sind beispielsweise Smart MOSFETs bekannt, welche über eine integrierte Temperaturüberwachung verfügen, die bei Überschreiten einer vorgegebenen Grenztemperatur ein Abschalten des betreffenden Halbleiterschalters zu dessen Schutz bewirkt. Die Schalter TRA, TRB können jedoch auch bei der in Fig. 1 gezeigten Beschaltung als einfache Halbleiterschalter ohne integrierte Schutzfunktion ausgebildet sein.

Ein Schutz vor Überlastung der Schalter TRA, TRB kann durch einen zur jeweiligen Schaltstrecke seriell verschalteten Shunt-Widerstand RA bzw. RB bereitgestellt werden. Die Schaltstrecke des Schalters TRA ist zwischen einer ersten Klemme OUT(P) und einer zweiten Klemme KLA gebildet. Die Schaltstrecke des Schalters TRB ist zwischen einer ersten Klemme OUT(M) und einer zweiten Klemme KLB gebildet. Der Shunt-Widerstand RA ist zwischen der zweiten Klemme KLA und einem Versorgungsspannungsanschluss P24 angeschlossen. Der Shunt-Widerstand ist zwischen der zweiten Klemme KLB des Schalters TRB und einem Bezugspotential VFS verschaltet.

Der Shunt-Widerstand RA ist mit seinen beiden Anschlüssen über einen ersten Spannungsteiler R21, R22 und einen ersten Vorwiderstand R23 sowie einen zweiten Spannungsteiler R31, R32 und einen zweiten Vorwiderstand R33 mit Eingängen ISA1 und ISA2 zur Strommessung gekoppelt. In entsprechender Weise sind die Anschlüsse des Shunt-Widerstandes RB mit Eingängen ISB1 und ISB2 für die Strommessung verbunden. Die Eingänge ISA1, ISA2 und ISB1, ISB2 sind Teil einer optionalen Stromauswerteschaltung PL2 der programmierbaren Logik PL, welche weiter unten in Verbindung mit einem Ausführungsbeispiel der programmierbaren Logik PL beschrieben wird.

Ein Verbraucher LA, der einen Aktor (z.B. einen Motor oder einen Schütz) repräsentiert, ist zwischen den ersten Klemmen OUT(P) und OUT(M) verschaltet. Die gezeigte Anordnung entspricht damit einer sog. PM-Schaltung. Die Erfindung ist jedoch nicht auf die Realisierung in Gestalt einer PM-Schaltung beschränkt, sondern kann auch bei der sog. PP-Schaltung zum Einsatz gelangen, bei der die beiden Schalter TRA, TRB seriell miteinander verschaltet und der Verbraucher LA mit Bezugspotential verbunden ist.

Die Überwachung der einwandfreien Funktion der Schalter TRA, TRB während deren Betriebs (d.h. während die Schalter TRA und TRB leitend geschaltet sind) wird dadurch ermöglicht, dass die ersten Klemmen OUT(P) und OUT(M) mit einem jeweiligen Feedback-Eingang FBA, FBB der programmierbaren Logik verbunden sind. Um eine Spannungsanpassung zwischen der Versorgungsspannung P24 sowie der Betriebsspannung VDD der programmierbaren Logik PL vorzunehmen, erfolgt die Verbindung der ersten Klemmen OUT(P) und OUT(M) jeweils über einen Spannungsteiler R11, R12 bzw. R51, R52. Die weiter mit den Feedback-Eingängen FBA und FBB verbundenen Widerstände R13 bzw. R53 stellen Vorwiderstände dar.

Das an den Feedback-Eingängen FBA und FBB anliegende Signal wird mit den an den Ausgängen OUTA bzw. OUTB anliegenden Ansteuersignalen verglichen und das Ergebnis des Vergleichs als Statusinformation in jeweils zwei Register geschrieben, um eine Redundanz der Auswertung sicherstellen zu können. Bei einem Fehler wird somit in den Statusregistern ein Flag gesetzt. Über eine insbesondere serielle Kommunikationsverbindung KVA und KVB können die Auswerteschaltungen µCA und µCB über das Auftreten eines Fehlers informiert werden.

Neben der Übermittlung von Statusinformationen über die Kommunikationsverbindungen KVA und KVB zu den Auswerteschaltungen µCA und µCB können weitere Statusdaten übertragen werden. Die Kommunikationsverbindungen können auch zur Parametrierung der programmierbaren Logik PL verwendet werden. Ebenso ist denkbar, dass die Ansteuersignale für die Schalter PRA, PRB nicht über eigene Kommunikationsleitungen, wie oben beschrieben, übertragen werden, sondern über die Kommunikationsverbindungen KVA und KVB. Zu diesem Zweck ist es vorteilhaft, wenn bei der Kommunikation über die Kommunikationsverbindungen KVA und KVB ein sicheres Protokoll verwendet wird. Die zwischen der Auswerteschaltung µCA und der programmierbaren Logik PL gebildete Kommunikationsverbindung KVA und die zwischen der Auswerteschaltung µCB und der programmierbaren Logik PL gebildete Kommunikationsverbindung KVB kann gemäß den Standards SPI, IO-Link oder RS-232 ausgebildet sein.

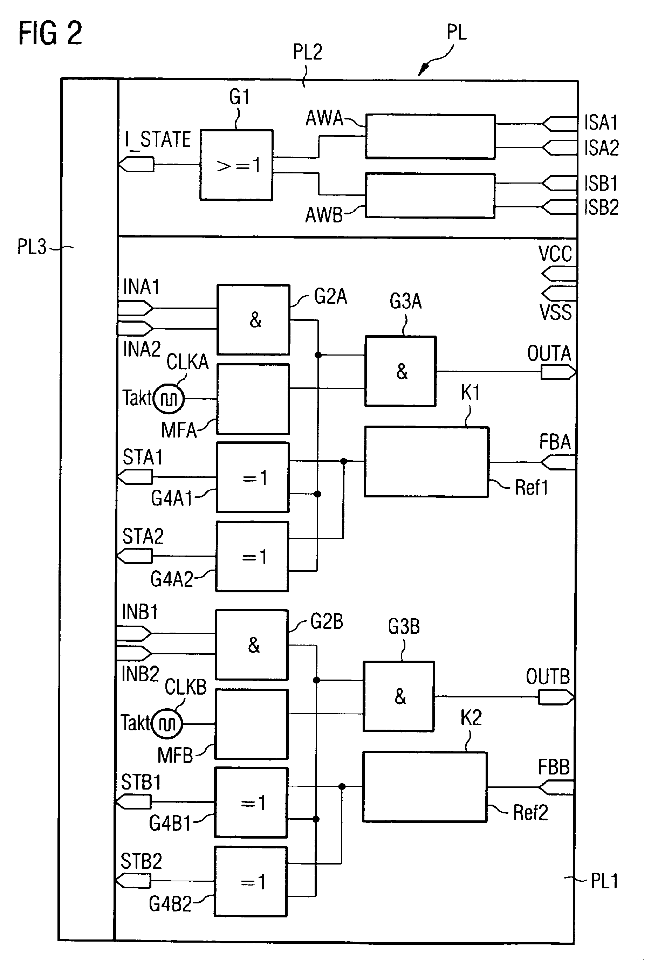

Fig. 2 zeigt eine mögliche Ausführungsvariante der in Fig. 1 dargestellten programmierbaren Logik PL. Die programmierbare Logik PL umfasst eine Test- und Überwachungseinrichtung PL1, eine Stromauswerteschaltung PL2 sowie eine Schnittstelle PL3 zu den Auswerteschaltungen µCA, µCB. Während die Test- und Überwachungseinrichtung PL1 notwendiger Bestandteil der programmierbaren Logik PL ist, stellen die Stromauswerteschaltung PL2 und die Schnittstelle PL3 zu den Auswerteschaltungen µCA, µCB optionale Bestandteile dar.

Die Test- und Überwachungseinrichtung PL1 umfasst ein UND-Gatter G2A, dessen Eingänge mit den Eingängen INA1 und INA2 verbunden sind. Ein Ausgang des UND-Gatters G2A ist mit einem ersten Eingang eines weiteren UND-Gatters G3A sowie mit ersten Eingängen zweier XOR-Gatter G4A1, G4A2 verbunden. Ein zweiter Eingang des UND-Gatters G3A ist mit einem Monoflop MFA verbunden, das eingangsseitig mit einem Takt CLKA gekoppelt ist. Am Ausgang des Monoflops MFA liegt ein invertiertes Signal an. Ein Ausgang des UND-Gatters G3A ist mit dem sicheren Ausgang OUTA verbunden. Ein erster Eingang eines Komperators K1 ist mit dem Feedback-Eingang FBA verbunden, wobei das dem Komperator zugeführte Signal invertiert ist. An einem zweiten Eingang Ref1 des Komperators K1 liegt ein Referenzsignal an. Ausgangsseitig ist der Komperator K1 jeweils mit zweiten Eingängen der XOR-Gatter G4A1 und G4A2 verbunden. Ein Ausgang des XOR-Gatters G4A1 ist mit einem Status-Eingang STA1 verbunden. In entsprechender Weise ist ein Ausgang des XOR-Gatters G4A2 mit einem Status-Eingang STA2 verbunden. Die Status-Eingänge STA1, STA2 sind mit den bereits erwähnten Statusregistern gekoppelt, welche im vorliegenden Ausführungsbeispiel in dem Microcontroller µCA vorgesehen sind.

Zu Redundanzzwecken ist der beschriebene Schaltungsteil in identischer Weise nochmals in der Test- und Überwachungseinrichtung PL1 vorgesehen.

Hierzu sind die Eingänge INB1, INB2 mit Eingängen eines UND-Gatters G2B verbunden. Ein Ausgang des UND-Gatters G2B ist mit einem ersten Eingang eines UND-Gatters G3B und mit ersten Eingängen zweier XOR-Gatter G4B1, G4B2 verbunden. Ein zweiter Eingang des UND-Gatters G3B ist mit einem Monoflop MFB verbunden, das eingangsseitig mit einem Taktgenerator CLKB gekoppelt ist. Am Ausgang des Monoflops MFB liegt ein invertiertes Signal an. Ein Ausgang des UND-Gatters G3B ist mit dem sicheren Ausgang OUTB verbunden. Der Feedback-Eingang FBB ist mit einem ersten Eingang des Komperators K2 verbunden, wobei das dem Komperator zugeführte Signal invertiert ist. An einem zweiten Eingang Ref2 liegt ein Referenzsignal an. Ausgangsseitig ist der Komperator K2 jeweils mit einem zweiten Eingang der Gatter G4B1 und G4B2 verbunden. Die Ausgänge der XOR-Gatter G4B1, G4B2 sind mit Status-Eingängen STB1, STB2 verbunden. Die Status-Eingänge STB1, STB2 sind mit zwei Registern verbunden, welche im Ausführungsbeispiel in der Auswerteschaltung µCB vorgesehen sind.

Die an den Status-Eingängen STA1, STA2, STB1, STB2 anliegenden Signale werden über die Kommunikationsverbindungen KVA, KVB an die Auswerteschaltungen µCA, µCB übertragen. Zu diesem Zweck weist die programmierbare Logik PL die Schnittstelle PL3 zu den Auswerteschaltungen µCA, µCB auf.

In der Stromauswerteschaltung PL2 erfolgt eine Überwachung der durch die elektronischen Schalter TRA, TRB fließenden Ströme. Zu diesem Zweck sind die Eingänge ISA1 und ISA2 bzw. ISB1 und ISB2 für die Strommessung mit jeweiligen Stromauswerteeinheiten AWA, AWB verbunden. Die Stromauswerteeinheiten AWA, AWB dienen dazu, aus der an den Eingängen ISA1 und ISA2 bzw. ISB1 und ISB2 anliegenden Spannungsdifferenzen und den bekannten Größen der Shunt-Widerstände RA, RB einen jeweiligen Strom durch die Schalter TRA, TRB zu ermitteln. Ausgangsseitig sind die Stromauswerteeinheiten AWA, AWB mit einem Gatter G1 gekoppelt, das mit einem Strom-Statusausgang I_STATE gekoppelt ist. Wird ein Überstrom durch einen der elektronischen Schalter TRA, TRB festgestellt, so liegt an dem Strom-Statusausgang I_STATE ein entsprechendes Statussignal an. Die Übertragung des Statussignals erfolgt bevorzugt über einen oder beide Kommunikationsverbindungen KVA, KVB. Dieses kann durch eine der Auswerteschaltungen µCA, µCB ausgewertet werden. Im Falle eines Überstromes erfolgt eine Abschaltung des betreffenden oder beider elektronischer Schalter TRA, TRB.

Die Funktionsweise der Test- und Überwachungseinrichtung PL1 ist wie folgt. An den Eingängen INA1 und INA2 liegt im regulären Betrieb der Sicherheitsschaltanordnung ein Signal logisch "1" an, wodurch am Ausgang des UND-Gatters G2A und an den ersten Eingängen der XOR-Gatter G4A1 und G4A2 ebenfalls eine logische "1" anliegt. Liegt am Ausgang des Monoflops MFA ebenfalls ein Signal logisch "1" an, so erfolgt aufgrund des am Ausgang des UND-Gatters G3A anliegenden Signals logisch "1" ein Leitendschalten des elektronischen Schalters TRA.

Zur Überprüfung des elektronischen Schalters wird durch das Monoflop MFA für eine kurze Zeit, z.B. für einen Zeitraum zwischen 300 und 500 ms, ein Signal logisch "0" erzeugt, so dass für diesen kurzen Zeitraum am Ausgang des UND-Gatters G3A eine logische "0" anliegt und der elektronische Schalter TRA sperrend geschaltet wird. Aufgrund dieser Überlagerung ergibt sich eine Potentialveränderung an der ersten Klemme OUT(P), welche sich an dem Feedback-Eingang FBA detektieren lässt. Die aufgrund des Sperrens des elektronischen Schalters TRA an der Klemme OUT(P) anliegende logisch "0" wird invertiert und dem ersten Eingang des Komperators K1 zugeführt. Aufgrund des an dem zweiten Eingang Ref1 des Komperators K1 anliegenden Referenzsignals liegt am Ausgang des Komperators K1 eine logisch "0" an, so dass sich bei der Verknüpfung mit der logisch "1" am ersten Eingang eines logisch "1" am Ausgang der Gatter G4A1 bzw. G4A2 ergibt. An dem Status-Eingang STA1 und STA2 lässt sich damit eine logisch "1" ablesen, was ein bestimmungsgemäßes Funktionieren des elektronischen Schalters TRA indiziert.

In entsprechender Weise arbeitet der weitere Schaltungsteil der Test- und Überwachungseinrichtung PL1.

Im Falle eines nicht bestimmungsgemäßen Funktionierens des elektronischen Schalters TRA würde am Status-Eingang STA1, STA2 eine logisch "0" anliegen.

Je nach Ausgestaltung des Referenzsignals Ref1 könnte auch eine umgekehrte Zuordnung ein bestimmungsgemäßes bzw. fehlerhaftes Funktionieren des elektronischen Schalters TRA indizieren.

Durch die Stromauswerteschaltung PL2 kann ein Überstrom durch jeden der elektronischen Schalter TRA, TRB erfasst werden. Insbesondere kann hierdurch eine Zerstörung der Schalter TRA, TRB verhindert werden, auch wenn diese als einfache Halbleiterschalter ausgebildet sind, welche über keine eigene Sicherheitselektronik verfügen.

Der Vorteil der erfindungsgemäßen Sicherheitsschaltanordnung besteht darin, dass das Ansteuern und Auswerten sicherheitsgerichteter Ausgänge standardisiert wird. Damit ist für Entwickler von sicherheitsgerichteten Steuerungen wesentlich weniger Know-how über sicherheitsgerichtete Ausgänge notwendig. Zudem können durch die Entkopplung der Test- und Überwachungseinrichtung von den Auswerteschaltungen kleinere und damit auch billigere Auswerteschaltungen, wie z.B. Microcontroller oder -prozessoren eingesetzt werden. Durch die Integration einer seriellen Schnittstelle in die programmierbare Logik kann bei komplexen Sicherheitssystemen die Anzahl der notwendigen Auswerteschaltungen reduziert werden. Darüber hinaus resultiert ein Geschwindigkeitsvorteil, da die Test- und Überwachungsfunktion parallel zur Steuerung durch die Auswerteeinrichtung erfolgen kann.

Ein weiterer Vorteil besteht darin, dass eine erfindungsgemäße Sicherheitsschaltanordnung einen im Vergleich zu herkömmlichen Sicherheitsschaltanordnungen geringeren Platzbedarf auf einem Schaltungsträger benötigt. Darüber hinaus kann Entflechtungsaufwand reduziert werden. Sämtliche Test- und Überwachungsfunktionen werden durch die programmierbare Logik gesteuert und ausgewertet, wobei lediglich das Ergebnis der Auswertung der oder den Auswerteschaltungen mitgeteilt wird. Hierdurch ergibt sich eine Entlastung des oder der Auswerteschaltungen.

### Bezugszeichenliste

- µCA: Auswerteschaltung (Microcontroller)
- µCB: Auswerteschaltung (Microcontroller)
- VDD: Versorgungsspannung
- VSS: Bezugspotential
- P24: Versorgungsspannung
- OUTA1: unsicherer Ausgang (Ansteueuersignal für Treiber)
- OUTB1: unsicherer Ausgang (Ansteueuersignal für Treiber)
- PL: Programmierbare Logik
- PL1: Test- und Überwachungseinrichtung
- PL2: Stromauswerteschaltung
- PL3: Schnittstelle zu Auswerteschaltungen
- INA: Eingang (Ansteueuersignal für Treiber)
- INB: Eingang (Ansteueuersignal für Treiber)
- INA1: Eingang (Ansteueuersignal für Treiber)
- INA2: Eingang (Ansteueuersignal für Treiber)
- INB1: Eingang (Ansteueuersignal für Treiber)
- INB2: Eingang (Ansteueuersignal für Treiber)
- OUTA: sicherer Ausgang (Ansteueuersignal für Treiber)
- OUTB: sicherer Ausgang (Ansteueuersignal für Treiber)
- FBA: Feedback-Eingang (Ansteueuersignal für Treiber)
- FBB: Feedback-Eingang (Ansteueuersignal für Treiber)
- TRA: elektronischer Schalter
- TRB: elektronischer Schalter
- OUT (P): erste Klemme
- OUT (M): erste Klemme
- KLA: zweite Klemme
- KLB: zweite Klemme
- LA: Verbraucher
- R11: Widerstand
- R12: Widerstand
- R13: Widerstand
- R21: Widerstand
- R22: Widerstand
- R23: Widerstand
- R31: Widerstand
- R32: Widerstand
- R33: Widerstand
- R51: Widerstand
- R52: Widerstand
- R53: Widerstand
- ISA1: Eingang für Strommessung
- ISA2: Eingang für Strommessung
- ISB1: Eingang für Strommessung
- ISB2: Eingang für Strommessung
- AWA: Stromauswerteeinheit
- AWB: Stromauswerteeinheit
- G1: Gatter
- K1: Komperator
- Ref1: Referenzeingang
- G2A: UND-Gatter
- G3A: UND-Gatter
- G4A1: XOR-Gatter
- G4A2: XOR-Gatter
- K2: Komperator
- Ref2: Referenzeingang
- G2B: UND-Gatter
- G3B: UND-Gatter
- G4B1: XOR-Gatter
- G4B2: XOR-Gatter
- CLKA: Takt
- CLKB: Takt
- MFA: Monoflop
- MFB: Monoflop
- KVA: Kommunikationsverbindung
- KVB: Kommunikationsverbindung
- RA: Shunt-Widerstand
- RB: Shunt-Widerstand
- STA1: Status-Eingang
- STA2: Status-Eingang
- STB1: Status-Eingang
- STB2: Status-Eingang
- I_STATE: Strom-Statusausgang

## Patentansprüche

1. Sicherheitsschaltanordnung zur Ausgabe eines Schaltsignals für zumindest einen Schalter (TRA, TRB) zur sicherheitsgerichteten Unterbrechung eines Stromkreises, über den die Abschaltung der Stromversorgung eines Verbrauchers (LA) steuerbar ist, umfassend:
- zumindest eine Auswerteschaltung (µCA, µCB), welche an einem jeweiligen Ausgang (OUTA1, OUTB1; OUTA2, OUTB2) ein jeweiliges unsicheres Ansteuersignal für den zumindest einen Schalter (TRA, TRB) abgibt;
- eine programmierbare Logik (PL), welcher das oder die Ansteuersignale an einem jeweiligen Eingang (INA1, INB1; INA2, INB2) zuführbar sind, und welche zur Ansteuerung des zumindest einen Schalters (TRA, TRB) mit einem sicheren Ansteuersignal mit dem zumindest einen Schalter (TRA, TRB) verbunden ist, wobei die programmierbare Logik als Test- und Überwachungseinrichtung ausgeführt ist, die während des Betriebs die einwandfreie Funktion des jeweiligen Schalters (TRA, TRB) testen und überwachen kann; **dadurch gekennzeichnet, dass**
- eine sichere potentialgebundene erste Klemme (OUT(P), OUT(M)) des zumindest einen Schalters (TRA, TRB), die zur Überwachung ihres Potentialzustands mit einem jeweiligen Feedback-Eingang (FBA, FBB) der programmierbaren Logik (PL) verbunden ist, wobei der betreffende Potentialzustand im fehlerlosen Betrieb dem sicheren Ansteuersignal des Schalters (TRA, TRB) entspricht.

2. Schaltanordnung nach Anspruch 1, **dadurch gekennzeichnet, dass** die Schaltanordnung zwei seriell miteinander verschaltete Schalter (TRA, TRB) umfasst.

3. Schaltanordnung nach Anspruch 1 oder 2, **dadurch gekennzeichnet, dass** die Schaltanordnung zwei Auswerteschaltungen (µCA, µCB) umfasst, welche an einem jeweiligen Ausgang (OUTA1, OUTB1; OUTA2, OUTB2) ein jeweiliges unsicheres Ansteuersignal für einen jeweiligen Schalter (TRA, TRB) abgeben.

4. Schaltanordnung nach einem der vorherigen Ansprüche, **dadurch gekennzeichnet, dass** die programmierbare Logik (PL) ein Mittel (CLK, MF) zur Generierung von Testpulsen aufweist, welche den an den jeweiligen Eingängen (INA1, INB1; INA2, INB2) der programmierbaren Logik (PL) anliegenden Ansteuersignalen der zumindest einen Auswerteschaltung (µCA, µCB) überlagerbar sind und welche bei bestimmungsgemäßer Funktion des zumindest einen Schalters (TRA, TRB) an den jeweiligen Feedback-Eingängen (FBA, FBB) detektierbar sind.

5. Schaltanordnung nach einem der vorherigen Ansprüche, **dadurch gekennzeichnet, dass** ein Status einer jeweiligen Klemme (OUT(P), OUT(M)) in jeweils redundante Register der programmierbaren Logik oder der zumindest einen Auswerteschaltung (µCA, µCB) einschreibbar ist.

6. Schaltanordnung nach einem der vorherigen Ansprüche, **dadurch gekennzeichnet, dass** jedem der Schalter (TRA, TRB) ein Mittel zur Erkennung von Überstrom zugeordnet ist, welches zur Überwachung des in der jeweiligen Schaltstrecke fließenden Stroms ausgebildet ist.

7. Schaltanordnung nach einem der vorherigen Ansprüche, **dadurch gekennzeichnet, dass** die programmierbare Logik eine, insbesondere serielle, Kommunikationsverbindung zu der zumindest einen Auswerteschaltung (µCA, CB) aufweist.

8. Schaltanordnung nach Anspruch 7, **dadurch gekennzeichnet, dass** ein Datenaustausch über die Kommunikationsverbindung unter Verwendung eines sicheren Protokolls erfolgt.

9. Schaltanordnung nach einem der vorherigen Ansprüche, **dadurch gekennzeichnet, dass** die programmierbare Logik als FPGA oder ASIC ausgebildet ist.

## Claims

1. Safety switching arrangement for outputting a switching signal for at least one switch (TRA, TRB) for the safety-oriented opening of a circuit which can be used to control the disconnection of the power supply of a load (LA), comprising:
- at least one evaluation circuit (µCA, µCB) which produces a respective unsafe drive signal for the at least one switch (TRA, TRB) at a respective output (OUTA1, OUTB1; OUTA2, OUTB2);
- a programmable logic unit (PL) which can be supplied with the drive signals at a respective input (INA1, INB1; INA2, INB2), and which is connected to the at least one switch (TRA, TRB) for driving the at least one switch (TRA, TRB) with a safe drive signal, said programmable logic unit being implemented as a testing and monitoring device which can test and monitor the correct functioning of the respective switch (TRA, TRB) during operation;
- a safe non-floating first terminal (OUT(P), OUT(M)) of the at least one switch (TRA, TRB), which terminal is connected to a respective feedback input (FBA, FBB) of the programmable logic unit (PL) in order to measure said terminal's potential state, said potential state corresponding to the safe drive signal of the switch (TRA, TRB) during fault-free operation.

2. Switching arrangement according to claim 1, **characterised in that** the switching arrangement comprises two series connected switches (TRA, TRB).

3. Switching arrangement according to claim 1 or 2, **characterised in that** the switching arrangement comprises two evaluation circuits (µCA, µCB) which produce a respective unsafe drive signal for a respective switch (TRA, TRB) at a respective output (OUTA1, OUTB1; OUTA2, OUTB2).

4. Switching arrangement according to one of the preceding claims, **characterised in that** the programmable logic unit (PL) has means (CLK, MF) of generating test pulses which can be superimposed on drive signals of the at least one evaluation circuit (µCA, µCB) that are present at the respective inputs (INA1, INB1; INA2, INB2) of the programmable logic unit (PL) and which are detectable at the respective feedback inputs (FBA, FBB) if the at least one switch (TRA, TRB) is operating as intended.

5. Switching arrangement according to one of the preceding claims, **characterised in that** a status of the respective terminal (OUT(P), OUT(M)) can be written to redundant registers of the programmable logic unit or of the at least one evaluation circuit (µCA, µCB) in each case.

6. Switching arrangement according to one of the preceding claims, **characterised in that** each switch (TRA, TRB) is assigned an overcurrent protection means which is designed to monitor the current flowing in the respective arc gap.

7. Switching arrangement according to one of the preceding claims, **characterised in that** the programmable logic unit has an, in particular serial, communications link to the at least one evaluation circuit (µCA, CB).

8. Switching arrangement according to claim 7, **characterised in that** data interchange over the communications link takes place using a secure protocol.

9. Switching arrangement according to one of the preceding claims, **characterised in that** the programmable logic is embodied as an FPGA or an ASIC.

## Revendications

1. Circuit de sécurité pour produire en sortie un signal de commutation pour au moins un contacteur (TRA, TRB) pour une interruption de sécurité d'un circuit électrique via lequel il est possible de commander la coupure de l'alimentation électrique d'un consommateur (LA), comprenant :
- au moins un circuit d'évaluation (µCA, µCB) qui délivre, au niveau d'une sortie respective (OUTA1, OUTB1 ; OUTA2, OUTB2), un signal d'excitation non sécurisé respectif pour l'au moins un contacteur (TRA, TRAB) ;
- une logique programmable (PL) sur une entrée respective (INA1, INB1 ; INA2, INB2) de laquelle peuvent être envoyés le ou les signaux d'excitation et qui est reliée à l'au moins un contacteur (TRA, TRB) pour exciter l'au moins un contacteur (TRA, TRB) avec un signal d'excitation sécurisé, la logique programmable se présentant sous la forme d'un dispositif de test et de surveillance qui peut tester et surveiller la parfaite fonction du contacteur respectif (TRA, TRB) pendant le fonctionnement ; **caractérisé en ce que**
- une première borne (OUT(P), OUT(M)) sécurisée de l'au moins un contacteur (TRA, TRB), reliée à un potentiel et qui, aux fins de la surveillance de son état de potentiel, est reliée à une entrée de rétroaction respective (FBA, FBB) de la logique programmable (PL), l'état de potentiel concerné correspondant, en fonctionnement sans erreur, au signal d'excitation sécurisé du contacteur (TRA, TRB).

2. Circuit selon la revendication 1, **caractérisé en ce que** le circuit comprend deux contacteurs (TRA, TRB) connectés en série entre eux.

3. Circuit selon la revendication 1 ou 2, **caractérisé en ce que** le circuit comprend deux circuits d'évaluation (µCA, µCB) qui délivrent, au niveau d'une sortie respective (OUTA1, OUTB1 ; OUTA2, OUTB2), un signal d'excitation non sécurisé respectif pour un contacteur respectif (TRA, TRB).

4. Circuit selon l'une des revendications précédentes, **caractérisé en ce que** la logique programmable (PL) comporte un moyen (CLK, MF) pour générer des impulsions de test qui peuvent être superposées aux signaux d'excitation de l'au moins un circuit d'évaluation (µCA, µCB) appliqués aux entrées respectives (INA1, INB1 ; INA2, INB2) de la logique programmable (PL) et qui peuvent être détectées aux entrées de rétroaction respectives (FBA, FBB) lorsque l'au moins un contacteur (TRA, TRB) fonctionne conformément à sa destination.

5. Circuit selon l'une des revendications précédentes, **caractérisé en ce qu'**un statut d'une borne respective (OUT(P), OUT(M)) peut être inscrit dans des registres respectivement redondants de la logique programmable ou de l'au moins un circuit d'évaluation (µCA, µCB).

6. Circuit selon l'une des revendications précédentes, **caractérisé en ce qu'**est associé, à chacun des contacteurs (TRA, TRB), un moyen de reconnaissance de surintensité qui est réalisé pour surveiller le courant qui traverse le trajet de commutation respectif.

7. Circuit selon l'une des revendications précédentes, **caractérisé en ce que** la logique programmable présente une liaison de communication, en particulier série, vers l'au moins un circuit d'évaluation (µCA, µCB).

8. Circuit selon la revendication 7, **caractérisé en ce qu'**un échange de données s'effectue via la liaison de communication avec utilisation d'un protocole sécurisé.

9. Circuit selon l'une des revendications précédentes, **caractérisé en ce que** la logique programmable se présente sous la forme d'un FPGA ou d'un ASIC.
